# EUROPEAN PATENT SPECIFICATION

(11) **EP 4 216 123 B1**
(45) Date of publication and mention of the grant of the patent: **07.08.2024**
(21) Application number: 22152605.6
(22) Date of filing: 21.01.2022
(51) Int. Cl.: G06Q 10/087, B41J 2/175, G06F 3/12, H04N 1/60

(54) **INKJET PRINTING METHODS**
TINTENSTRAHLDRUCKVERFAHREN
PROCÉDÉS D'IMPRESSION À JET D'ENCRE

(43) Date of publication of application: 26.07.2023
(73) Proprietor: AGFA NV, 2640 Mortsel (BE)
(72) Inventor: VAN THIENEN, Bjorn, 2640 Mortsel (BE); LAMPROYE, Rudi, 2640 Mortsel (BE); VERHAEGEN, Marc, 2640 Mortsel (BE); CORMOND, Alain, 2640 Mortsel (BE)
(74) Representative: Strijckers, Hans Louis P.

(56) References cited:
- JP-A- 2004 070 568
- JP-A- 2004 227 492
- JP-A- 2004 240 837
- JP-A- 2005 280 067

## Description

### Technical Field

The present invention relates to cost-efficient inkjet printing methods by having minimal inkjet ink waste in an industrial environment.

### Background Art

Inkjet printing systems are more and more incorporated into industrial production lines. The main advantage of inkjet is that it offers high flexibility, such as variable data printing allowing small run lengths or even a single print without large pre-print preparations.

Industrial production lines have to be operated reliably in a cost-effective manner. One of the cost-drivers in an inkjet production line is the consumption of inkjet ink.

Several measures have been developed to reduce the amount of inkjet ink necessary to produce a certain image. For instance, US 8270028 (AGFA) deals with a specific color management technique that reduces the ink consumption in the reproduction of color images on inkjet printers.

Another measure is to enhance the reliability of inkjet printing. Printing artefacts, for example caused by failing nozzles of an inkjet print head due to the clogging of the nozzle by the inkjet ink, lead to waste of inkjet inks as the printed image does not meet the required image quality. For instance, EP 1352746 A (SHARP) discloses the presence in the inkjet printer of a maintenance station capable of executing a capping mode for capping a nozzle of the printing head; a wiping mode for wiping the nozzle of the printing head; an ink spitting mode for preventing clogging of the nozzle of the printing head, and a waste ink collecting bath for collecting ink discharged during the ink spitting mode.

Another source of inkjet ink waste is caused by the type and volume of print jobs. Inkjet images are often printed using a CMYK inkjet ink set. When a high number of the same or similar images are to be printed, then it may occur that, for example, the magenta inkjet ink M is consumed at a much higher rate than the cyan inkjet ink C. Usually inkjet inks are ordered in the same amount for each colour, which then can lead to a situation where there is a shortage of the magenta inkjet ink M, while the cyan inkjet ink C goes past its expiration date.

Hence, there still remains a need for improved inkjet printing methods exhibiting less waste of inkjet inks stored in an ink stock.

### Summary of invention

In order to overcome the problems described above, preferred embodiments of the present invention have been realized with an inkjet printing method including the steps of: providing inkjet inks from an inkjet ink stock (1) to an inkjet printing device (2); printing the inkjet inks with the inkjet printing device (2) on a substrate; automatically sending digital inkjet ink consumption data from the inkjet printing device (2) via a digital connection (3) to a computer (4) of an inkjet ink supplier (5); and replenishing the inkjet ink stock (1) with an amount of at least one of the inkjet inks from the inkjet ink supplier (5), wherein said amount is determined in accordance with the digital inkjet ink consumption data.

It was found that the above inkjet printing method allowed to decrease the waste of inkjet inks taken from the ink stock (1). Furthermore, not only were there less shipment costs of inkjet inks, but also the size of the ink stock (1) could be reduced, both resulting in economic benefits.

An objective of the invention is the use of ink consumption data collected by one or more inkjet printing devices to reduce waste of inkjet inks by maintaining an ink stock for each of the inkjet inks supplied to said inkjet printing devices at a predetermined level.

These and other objectives will become apparent from the detailed description hereinafter.

### Brief description of drawings

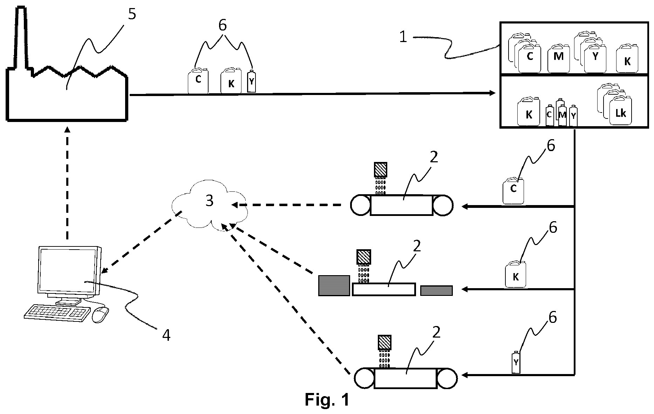

**Figure 1** is a schematic representation of an inkjet printing method in accordance with the invention. Inkjet printing devices (2) are provided with inkjet inks in ink transporting units (6) from an inkjet ink stock (1). The inkjet inks are consumed mainly by the inkjet printing devices (2) for printing images on a substrate, but some inkjet ink may also be consumed to ensure printing reliability by executing maintenance operations, such as ink spitting. The consumed amount of ink is stored in the inkjet printing device as digital inkjet ink consumption data that is periodically sent via a digital connection (3) by the inkjet printing devices (2) to a computer (4) of an inkjet ink supplier (5). The computer (4) uses the digital inkjet ink consumption data to determine an amount for replenishing the inkjet ink stock (1), where after an inkjet ink supplier (5) is then instructed by the computer to send that amount of inkjet ink to the inkjet ink stock (1).

### Detailed description

### Inkjet Printing Methods

An inkjet printing method according to the present invention includes the steps of: providing inkjet inks from an inkjet ink stock (1) in ink transporting units (6) including a machine readable code to an inkjet printing device (2); scanning the machine readable code by a scanning device; printing the inkjet inks with the inkjet printing device (2) on a substrate; automatically sending digital inkjet ink consumption data from the inkjet printing device (2) via a digital connection (3) to a computer (4) of an inkjet ink supplier (5); and replenishing the inkjet ink stock (1) with an amount of at least one of the inkjet inks from the inkjet ink supplier (5); wherein said amount is determined in accordance with the digital inkjet ink consumption data; wherein said amount is sent by the inkjet ink supplier in ink transporting units (6) selected from the group consisting of bottles, jerrycans, barrels and IBC-containers; and wherein information scanned from the machine readable code is sent to the computer (4).

In a more preferred embodiment of the inkjet printing method, inkjet inks are provided from the inkjet ink stock (1) to a plurality of inkjet printing devices (2), each of them automatically sending digital inkjet ink consumption data via a digital connection (3) to the computer (4). When there is a plurality of inkjet printing devices (2), the management of an inkjet ink stock becomes much more challenging for maintaining a sufficient stock level of inkjet inks so that there are on the one side no unforeseen printing interruptions due to lack of inkjet ink availability and that on the other side a minimal ink waste can be achieved.

The inkjet printing devices (2) are equipped with means to collect ink consumption data of the images that they print and optionally of maintenance operations. Such digital ink consumption data can be sent continuously (real time connectivity with streaming data) as the inkjet printing device prints it or performs a maintenance operation, but preferably the digital ink consumption data is sent periodically. For the latter a sum of the amount of ink consumed within a certain period is made and after the expiration of that period it is sent to the computer (4). An advantage of sending the digital ink consumption data periodically is that there is no constant occupation of part of the bandwidth of the network connecting the inkjet printing device (2) and the computer (4). Therefore, in a preferred embodiment of the inkjet printing method, the sending of the digital inkjet ink consumption data is executed periodically, preferably on a daily basis.

The amount of inkjet ink consumed can be expressed as desired in a volume, e.g. milliliter or liter, or in a weight, e.g. kilogram. Preferably volume is used to prevent issues due to the density of the inkjet ink.

In a preferred embodiment of the inkjet printing method, the greatest integer function is used for determining the amount for replenishing the inkjet ink stock (1). The greatest integer function is a function that returns the rounded-down integer value of a given number. For example, if the amount of consumed inkjet ink is 137.68 L then the greatest integer function returns a value of 137 L.

The amount determined for replenishment of the inkjet ink stock (1) is preferably adapted to the size of the ink transporting units (6). In a preferred embodiment of the inkjet printing method, the amount is sent in a number n of the ink transporting units (6), with n being the greatest integer function of the amount A_{C} of consumed inkjet ink divided by the amount A_{U} of ink containable by the ink transporting unit (6): n = f(A_{C}A_{U}) and wherein the residual amount A_{R}, if any, is stored by the computer (4) for a future replenishment of the same inkjet ink in the same inkjet ink stock (1): A_{R} = A_{C} - n × A_{U.}

In the case of the above amount of consumed inkjet ink of 137.68 L with an ink transporting unit capable of holding 5 L of inkjet ink, that would result in n=f(137.68 L / 5 L) = 27 ink transporting units. The residual amount A_{R} would then be A_{R} = 137.68 L - 27 × 5 L = 2.68 L. That amount of 2.68 L is stored by the computer (4) for addition to future digital ink consumption data of the same inkjet ink in the same inkjet ink stock (1).

Instead of the greatest integer function, alternatively mathematical rounding can be used. However, this increases somewhat the risk of an inkjet ink not being available in the inkjet ink stock (1).

Sometimes an amount of inkjet ink may go missing in the inkjet ink stock (1). For example, some inkjet ink may be spilled in an accident in the inkjet ink stock (1) or when filling up the ink tank of an inkjet printing device (2). Such accidents could be taken into to account for determining a minimum level of inkjet ink available in the inkjet ink stock, but in a preferred embodiment of the inkjet printing method, a stock control is performed of the inkjet ink stock (1) wherein the amounts of each inkjet ink in the inkjet ink stock (1) are sent to the computer (4) at least once a year, but no more than 12 times per year. If a stock control is done more than once a month, then clearly the economic benefits of the inkjet printing method according to the invention would be diminished.

The inkjet ink delivery time is in addition to the ink consumption usually the most important factor influencing the availability on inkjet ink for avoiding any unforeseen interruptions in inkjet printing. In a preferred embodiment of the inkjet printing method, the amounts of each inkjet ink in the ink stock (1) are kept at a predetermined level that is determined by the average delivery time of the inkjet inks.

There always remains a possibility that for filling up a tank of an inkjet printing device that more recently delivered inkjet ink is taken instead of inkjet ink that has already been in the inkjet ink stock (1) for a longer time. If this occurs repetitively, again a situation could be created wherein some inkjet ink of the inkjet ink stock (1) is wasted due to expiration of its shelf life. Therefore, in the inkjet printing method, the ink transporting units (6) include a machine readable code, such as a bar-code or a OR code. Rather than printed, the machine readable code may also be present in a device on an ink transporting unit, such as a RFID tag. When filling up an inkjet printing device (2) the machine readable code is then scanned by a scanning device (tag reader) that is preferably part of the inkjet printing device. The machine readable code contains information, such as e.g. the type and the batch number of the inkjet ink, which is also sent to the computer (4). The computer (4) can then check if no inkjet ink supplied by the inkjet ink supplier (5) is left in the inkjet ink stock (1) having a shorter shelf life than the inkjet ink of the scanned machine readable code. If this would be the case, then a warning can be sent to the operator of the inkjet printing device (2) who can then decide to use inkjet ink having the shorter shelf life. This again leads to less waste of inkjet inks. The scanning of the machine readable code is preferably performed by a scanning device integrated in the inkjet printing device (2), but may also be performed by another scanning device, for example, a smart phone which also sends this information to the computer (4).

The scanning is also of importance when different types of inkjet inks are printed by the same printer. For example, sometimes UV curable inkjet inks with a high content of polyfunctional polymerizable compounds are used for achieving an image with a high scratch resistance, while for other applications flexibility is much more important than scratch resistance, so that UV curable inkjet inks with a low content of polyfunctional polymerizable compounds are used.

### Inkjet Inks

There is no limitation on the nature of the inkjet inks used by the inkjet printing device (2). The inkjet inks may for instance be solvent based inkjet inks, aqueous inkjet inks and/or UV curable inkjet inks.

Different types of inkjet inks may also be used. For example, UV curable inkjet inks of the same colour but of a different viscosity may be present in the inkjet ink stock (1). This is usually the case when the inkjet printing devices (2) contain different types of inkjet print heads requiring different ink viscosities.

The same type of inkjet inks may also be used by a plurality of inkjet printing devices (2).

### Inkjet Ink Stock

The inkjet ink stock (1) is preferably located within no more than 500 m, preferably no more than 200 m from the inkjet printing devices (2) for allowing easy and fast replenishment of the inkjet printing devices (2).

The inkjet ink stock (1) is kept at a predetermined level based on the average delivery time of the inkjet inks. As an example, if the average ink delivery time is 5 days and the average daily consumption of an inkjet ink is 100 L, then one could to keep the inkjet ink stock (1) at a predetermined level of 600 L, which is 6 days × 100 L/day. The extra day above the average ink delivery time of 5 days is then to be regarded as a safety margin in case there would be a late delivery.

### Inkjet Printing Devices

An inkjet printing device (2) includes print heads for ejecting small droplets of inkjet ink in a controlled manner through nozzles onto a substrate moving relative to the print head(s). In the present invention, an inkjet printing device (2) also includes means to send digital ink consumption data that it collected via a digital connection, e.g. a wifi-connection, over the internet to the computer (4).

For achieving reliable inkjet printing and thus less waste of inkjet ink, a print head for the inkjet printing devices is preferably a piezoelectric print head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A particularly preferred piezoelectric print head is a so-called through-flow piezoelectric drop-on-demand print head. By using through-flow print heads, the reliability is enhanced and thus a more efficient and economical inkjet printing method is obtained. Such a print head is, for example, available from FUJI DIMATIX as the print heads Samba G3L and G5L and from XAAR as the 5601 print head.

However, the inkjet printing method according to the present invention is not restricted to piezoelectric inkjet printing. Other inkjet print heads can be used and include various types, such as continuous type print heads and thermal print heads.

### Digital Connections

The digital ink consumption data is sent from an inkjet printing device (2) to a computer (4) via a digital connection (3). The digital connection can take any desired form. It can be a connection using an optical fiber or a wireless connection, such as a wifi connection according to the IEEE 802.11 standard.

### Computers and Computerized Systems

The computer (4) operates a program. A program which is operated in the computer is a program controlling a processor in order to realize functions of the various preferred embodiments according to the present invention. Therefore, information which is handled by the computer is temporarily accumulated in a RAM at the time of the processing. Thereafter, the information may be stored in various types of circuitry in the form of ROMs and HDDs, and read out by circuitry within, or included in combination with, the computer as necessary.

It should be noted that the description referring to "circuitry" is in no way limited to an implementation that is hardware only, and as persons of ordinary skill in the relevant art would know and understand, such descriptions and recitations of "circuitry" include combined hardware and software implementations in which the circuitry is operative to perform functions and operations based on machine readable programs, software or other instructions in any form that are usable to operate the circuitry.

The computer (4) is part of a computerized system. A computerized system is a system in which the work is done by computer.

A computerized system in a preferred embodiment of the present invention comprises: means A for receiving digital inkjet ink consumption data from an inkjet printing device (2) for inkjet inks printed by said inkjet printing device (2); means B for determining a replenishment amount of said inkjet inks in an inkjet ink stock (1) supplying said inkjet printing device (2) based on the digital inkjet ink consumption data; and means C for initiating replenishment of at least one of the inkjet inks by an ink supplier (5) to the inkjet ink stock (1) supplying said inkjet printing device (2).

The means A are means for forming a digital connection to a network for receiving digital inkjet ink consumption data from the inkjet printing device (2). This network is preferably the internet.

The means B includes a database storing information on the inkjet ink stock (1) and a program for calculating a replenishment amount. The means B is preferably the computer (4), but the database and/or the program may also be stored on a recording medium, such as any one of a semiconductor medium (for example, the ROM, a non-volatile memory card or the like), an optical recording medium (for example, a DVD, an MO, an MD, a CD, a BD or the like), and a magnetic recording medium (for example, a magnetic tape, a flexible disc or the like). By executing the loaded program, the functions of the various preferred embodiments of the present invention are not only realized, but the functions of preferred embodiments of the present invention may be realized by processing the loaded program in combination with an operating system or other application programs, based on an instruction of the program.

The computerized system contains also a means C for forming a digital connection with a computer processing inkjet ink orders at the inkjet ink supplier (5).

In addition to the above digital connections with the inkjet printing device (2) and a computer processing inkjet ink orders at the inkjet ink supplier (5), a digital connection may also be available for direct interaction by, for example, a stock keeper of the inkjet ink stock (1) or an operator of an inkjet printing device (2). The latter digital connection can be made by an app on a smart phone allowing the stock keeper or the operator to make a adjustment of the inkjet ink stock when for instance an accident occurs with a large spillage of inkjet ink or when a specific print order is received requiring a much higher amount of a certain inkjet ink. The same app can be equipped with other functionalities, such as showing the exact levels available for each inkjet ink, the amount of a specific inkjet ink above the minimum threshold level of that inkjet ink in the ink stock or when the next inkjet ink delivery may be expected. Alternatively, instead of an app on a smart phone, the digital connection may also be made via a computer of the stock keeper or the operator that connects to a portal on the computer (4).

### Ink Transporting Units

Some ink transporting units can only contain a small ink amount, such as e.g. ink cartridges, or are rather fragile or vulnerable, such as an "ink-in-bag". An "ink-in-bag" is a cardboard box containing a plastic bag holding the ink and can be easily damaged when falling from a shelf in the ink stock, leading again to ink waste.

Therefore, in the inkjet printing method, the ink transporting unit is selected from the group consisting of bottles, jerrycans, barrels and IBC-containers.

### Inkjet Ink Supplier

The inkjet ink supplier (5) is the company supplying the inkjet inks to the inkjet ink stock (1). This is normally the inkjet ink manufacturer, but may also be a local sales representation or a local third party ink dealer near the location of the inkjet printing devices (2). The latter have the advantage that the predetermined level of inkjet inks in the ink stock (1) can be further reduced because of a smaller delivery time of the inkjet inks.

### Substrates

There is no limitation on what substrate is used to print on by the inkjet printing devices (2). The substrate may be a 2-dimensional substrate such as paper, plastic foils and panels, glass, natural or artificial leather, metal substrates and the like. But also 3D-objects may be inkjet printed or inkjet printed on.

In a preferred embodiment, the substrate is a décor paper or a thermoplastic foil for making decorative laminates and decorative laminate panels used for flooring, furniture and walls. Such a manufacturing method of a decorative paper or foil includes the steps of: providing inkjet inks from an inkjet ink stock (1) to an inkjet printing device (2); printing the inkjet inks with the inkjet printing device (2) on a décor paper or thermoplastic foil; automatically sending digital inkjet ink consumption data from the inkjet printing device (2) via a digital connection (3) to a computer (4) of an inkjet ink supplier (5); and replenishing the inkjet ink stock (1) with an amount of at least one of the inkjet inks from the inkjet ink supplier (5), wherein said amount is determined in accordance with the digital inkjet ink consumption data. Such a method is especially advantageous for single pass inkjet printing, where the décor paper or thermoplastic foil is usually more than 2 m wide and is transported at speeds of even more than 150 m/min. The ink transporting units (6) are then usually IBC-containers, which may increase the risk for printing interruptions due to lack of a certain inkjet ink being available. This is especially the case for a black inkjet ink which is highly consumed for printing dark wood decors, but only consumed at a low level for pale wood decors.

### Reference signs list

**Table 1**

| | |
|---|---|
| 1 | Inkjet ink stock |
| 2 | Inkjet printing device |
| 3 | Digital connection |
| 4 | Computer |
| 5 | Inkjet ink supplier |
| 6 | Ink transporting units |

## Claims

1. An inkjet printing method including the steps of:
- providing inkjet inks from an inkjet ink stock (1) in ink transporting units (6) including a machine readable code to an inkjet printing device (2);
- scanning the machine readable code by a scanning device;
- printing the inkjet inks with the inkjet printing device (2) on a substrate;
- automatically sending digital inkjet ink consumption data from the inkjet printing device (2) via a digital connection (3) to a computer (4) of an inkjet ink supplier (5); and
- replenishing the inkjet ink stock (1) with an amount of at least one of the inkjet inks from the inkjet ink supplier (5),
wherein said amount is determined in accordance with the digital inkjet ink consumption data;
wherein said amount is sent by the inkjet ink supplier in ink transporting units (6) selected from the group consisting of bottles, jerrycans, barrels and IBC-containers; and
wherein information scanned from the machine readable code is sent to the computer (4).

2. The inkjet printing method according to claim 1, wherein inkjet inks are provided from the inkjet ink stock (1) to a plurality of inkjet printing devices (2), each of them automatically sending digital inkjet ink consumption data via a digital connection (3) to the computer (4).

3. The inkjet printing method according to claim 1 or 2, wherein the sending of the digital inkjet ink consumption data is executed periodically, preferably daily.

4. The inkjet printing method according to claim 1, wherein said amount is sent in a number n of the selected ink transporting units (6), with n being the greatest integer function of the amount A_{C} of consumed inkjet ink divided by the amount A_{U} of ink containable by the selected ink transporting unit (6): n = f(A_{C}/A_{U}) and wherein the residual amount A_{R}, if any, is stored by the computer (4) for a future replenishment of the same inkjet ink in the same inkjet ink stock (1): A_{R} = A_{C} - n × A_{U.}

5. The inkjet printing method according to any one of claims 1 to 4, wherein the amounts of each inkjet ink in the inkjet ink stock (1) are sent to the computer (4) at least once a year, but no more than 12 times per year.

6. The inkjet printing method according to any one of claims 1 to 5, wherein the amounts of each inkjet ink in the ink stock (1) are kept at a predetermined level that is determined by the average delivery time of the inkjet inks.

7. The inkjet printing method according to claim 1, wherein information scanned from the machine readable code is sent to the computer (4) by the inkjet printing device or a smart phone.

8. The inkjet printing method according to claim 1, wherein the scanning device is a tag reader.

9. The inkjet printing method according to any one of claims 1 to 8, wherein a warning is sent to an operator of the inkjet printing device (2) that inkjet ink supplied by the inkjet ink supplier (5) is left in the inkjet ink stock (1) having a shorter shelf life than the inkjet ink of the scanned machine readable code.

10. A manufacturing method of a decorative paper or thermoplastic foil for decorative laminates and decorative laminate panels used for flooring, furniture and walls including the inkjet printing method according to any one of claims 1 to 9.

11. Use of ink consumption data collected by one or more inkjet printing devices (2) to reduce waste of inkjet inks by maintaining an ink stock (1) for each of the inkjet inks supplied to said inkjet printing devices at a predetermined level, wherein the inkjet inks are supplied in ink transporting units (6) including a machine readable code; and the ink transporting units (6) are selected from the group consisting of bottles, jerrycans, barrels and IBC-containers.

## Patentansprüche

1. Ein Tintenstrahldruckverfahren, das die folgenden Schritte umfasst:
- Zuführen von Tintenstrahltinten aus einem Tintenstrahltintenvorrat (1) in Tintentransporteinheiten (6), die einen maschinenlesbaren Code umfassen, zu einer Tintenstrahldruckvorrichtung (2),
- Scannen des maschinenlesbaren Codes mittels einer Scannvorrichtung,
- Druck der Tintenstrahltinten auf ein Substrat mittels der Tintenstrahldruckvorrichtung (2),
- automatischen Senden, über eine digitale Verbindung (3), digitaler Daten bezüglich des Verbrauchs der Tintenstrahltinten von der Tintenstrahldruckvorrichtung (2) zu einem Rechner (4) eines Tintenstrahltintenlieferanten (5), und
- Auffüllen des Tintenstrahltintenvorrats (1) mit einer Menge von mindestens einer der Tintenstrahltinten des Tintenstrahltintenlieferanten (5),
wobei die Menge gemäß den digitalen Tintenstrahltintenverbrauchsdaten bestimmt wird,
wobei der Tintenstrahltintenlieferant die Menge in Tintentransporteinheiten (6), gewählt aus der Gruppe bestehend aus Flaschen, Kanistern, Fässern und IBC-Behältern, versendet, und
wobei aus dem maschinenlesbaren Code gescannte Information zum Rechner (4) gesendet wird.

2. Das Tintenstrahldruckverfahren nach Anspruch 1, wobei aus dem Tintenstrahltintenvorrat (1) Tintenstrahltinten zu einer Vielzahl von Tintenstrahldruckvorrichtungen (2), von denen jede automatisch über eine digitale Verbindung (3) digitale Tintenstrahltintenverbrauchsdaten zum Rechner (4) sendet, zugeführt werden.

3. Das Tintenstrahldruckverfahren nach Anspruch 1 oder 2, wobei die digitalen Tintenstrahltintenverbrauchsdaten periodisch, bevorzugt täglich, gesendet werden.

4. Das Tintenstrahldruckverfahren nach Anspruch 1, wobei die Menge in einer Anzahl n der gewählten Tintentransporteinheiten (6) gesendet wird, wobei n die Abrundungsfunktion der Menge A_{C} verbrauchter Tintenstrahltinte ist, geteilt durch die Menge A_{U} Tinte, die in der gewählten Tintentransporteinheit (6) enthalten sein kann: n = f(A_{C}/A_{U}), und wobei die eventuelle Restmenge A_{R} durch den Rechner (4) zwecks einer zukünftigen Auffüllung der gleichen Tintenstrahltinte im gleichen Tintenstrahltintenvorrat (1) gespeichert wird: A_{R} = A_{C} - n × A_{U}.

5. Das Tintenstrahldruckverfahren nach einem der Ansprüche 1 bis 4, wobei die Mengen jeder Tintenstrahltinte im Tintenstrahltintenvorrat (1) mindestens 1-mal pro Jahr, jedoch nicht mehr als 12-mal pro Jahr, zum Rechner (4) gesendet werden.

6. Das Tintenstrahldruckverfahren nach einem der Ansprüche 1 bis 5, wobei die Mengen jeder Tintenstrahltinte im Tintenvorrat (1) auf einem vorher festgelegten Niveau, das sich nach der durchschnittlichen Lieferzeit der Tintenstrahltinten richtet, gehalten werden.

7. Das Tintenstrahldruckverfahren nach Anspruch 1, wobei aus dem maschinenlesbaren Code gescannte Information durch die Tintenstrahldruckvorrichtung oder ein Smartphone zum Rechner (4) gesendet wird.

8. Das Tintenstrahldruckverfahren nach Anspruch 1, wobei die Scannvorrichtung ein Etikettenleser ist.

9. Das Tintenstrahldruckverfahren nach einem der Ansprüche 1 bis 8, wobei an einen Bediener der Tintenstrahldruckvorrichtung (2) eine Warnung gesendet wird, dass restliche, durch den Tintenstrahltintenlieferanten (5) gelieferte Tintenstrahltinte im Tintenstrahltintenvorrat (1) eine kürzere Lebensdauer hat als die die Tintenstrahltinte des gescannten maschinenlesbaren Codes.

10. Ein Verfahren zur Herstellung eines dekorativen Papiers oder einer dekorativen Folie für dekorative Laminate und dekorative Laminatplatten für Fußboden, Möbel und Wände, das das Tintenstrahldruckverfahren nach einem der Ansprüche 1 bis 9 umfasst.

11. Verwendung von durch eine oder mehrere Tintenstrahldruckvorrichtungen (2) gesammelten Tintenverbrauchsdaten, um Tintenstrahltintenabfall zu verringern, indem ein Tintenvorrat (1) für jede der an die Tintenstrahldruckvorrichtungen zugeführten Tintenstrahltinten auf einem vorher festgelegten Niveau gehalten wird, wobei die Tintenstrahltinten in einen maschinenlesbaren Code enthaltenden Tintentransporteinheiten (6) geliefert werden und die Tintentransporteinheiten (6) aus der Gruppe bestehend aus Flaschen, Kanistern, Fässern und IBC-Behältern gewählt werden.

## Revendications

1. Procédé d'impression à jet d'encre comprenant les étapes consistant à:
- fournir des encres pour jet d'encre, à partir d'un stock d'encres pour jet d'encre (1), dans des unités de transport d'encre (6) comprenant un code lisible par machine vers un dispositif d'impression à jet d'encre (2),
- balayer le code lisible par machine au moyen d'un dispositif de balayage,
- imprimer les encres pour jet d'encre sur un substrat au moyen du dispositif d'impression à jet d'encre (2),
- envoyer automatiquement, par le biais d'une connexion numérique (3), des données numériques relatives à la consommation des encres pour jet d'encre du dispositif d'impression à jet d'encre (2) à un ordinateur (4) d'un fournisseur d'encres pour jet d'encre (5), et
- réapprovisionner le stock d'encres pour jet d'encre (1) d'une quantité d'au moins une des encres pour jet d'encre du fournisseur d'encres pour jet d'encre (5),
**caractérisé en ce que** ladite quantité est déterminée en fonction des données numériques relatives à la consommation des encres pour jet d'encre,
**caractérisé en ce que** le fournisseur d'encres pour jet d'encre envoie ladite quantité dans des unités de transport d'encre (6) choisies parmi le groupe composé de bouteilles, jerrycans, fûts et conteneurs IBC, et
**caractérisé en ce que** de l'information obtenue en balayant le code lisible par machine est envoyée à l'ordinateur (4).

2. Procédé d'impression à jet d'encre selon la revendication 1, **caractérisé en ce que** des encres pour jet d'encre sont fournies à partir du stock d'encres pour jet d'encre (1) à une multitude de dispositifs d'impression à jet d'encre (2) dont chacun envoie automatiquement à l'ordinateur (4), par le biais d'une connexion numérique (3), des données numériques relatives à la consommation des encres pour jet d'encre.

3. Procédé d'impression à jet d'encre selon la revendication 1 ou 2, **caractérisé en ce que** les données numériques relatives à la consommation des encres pour jet d'encre sont envoyées périodiquement, de préférence chaque jour.

4. Procédé d'impression à jet d'encre selon la revendication 1, **caractérisé en ce que** ladite quantité est envoyée dans un nombre n des unités de transport d'encre (6) sélectionnées, où n est la fonction partie entière inférieure de la quantité A_{C} d'encre pour jet d'encre consommée divisée par la quantité A_{U} d'encre pouvant être contenue dans l'unité de transport d'encre (6) sélectionnée: n = f(A_{C}/A_{U}), et **caractérisé en ce que** l'ordinateur (4) mémorise la quantité résiduelle A_{R} éventuelle en vue d'un réapprovisionnement futur de la même encre pour jet d'encre dans le même stock d'encres pour jet d'encre (1): A_{R} = A_{C} - n × A_{U}.

5. Procédé d'impression à jet d'encre l'une quelconque des revendications 1 à 4, **caractérisé en ce que** les quantités de chaque encre pour jet d'encre dans le stock d'encres pour jet d'encre (1) sont envoyées à l'ordinateur (4) au moins 1 fois par an, avec un maximum de 12 fois par an.

6. Procédé d'impression à jet d'encre l'une quelconque des revendications 1 à 5, **caractérisé en ce que** les quantités de chaque encre pour jet d'encre dans le stock d'encres (1) sont maintenues à une valeur prédéterminée qui se détermine en fonction du délai de livraison moyen des encres pour jet d'encre.

7. Procédé d'impression à jet d'encre selon la revendication 1, **caractérisé en ce que** de l'information obtenue en balayant le code lisible par machine est envoyée à l'ordinateur (4) par le dispositif d'impression à jet d'encre ou un smartphone.

8. Procédé d'impression à jet d'encre selon la revendication 1, **caractérisé en ce que** le dispositif de balayage est un lecteur d'étiquettes.

9. Procédé d'impression à jet d'encre l'une quelconque des revendications 1 à 8, **caractérisé en ce qu'**un opérateur du dispositif d'impression à jet d'encre (2) reçoit un avertissement lui signalant que le stock d'encres pour jet d'encre (1) contient une quantité restante d'encre pour jet d'encre fournie par le fournisseur d'encres pour jet d'encre (5) dont la durée de vie est inférieure à celle de l'encre pour jet d'encre du code lisible par machine balayé.

10. Procédé de fabrication d'un papier décoratif ou d'une feuille décorative pour des stratifiés et panneaux stratifies décoratifs pour des sols, des meubles et des parois comprenant le procédé d'impression à jet d'encre selon l'une quelconque des revendications 1 à 9.

11. Utilisation de données de consommation d'encre collectées par un ou plusieurs dispositifs d'impression à jet d'encre (2) afin de réduire la perte d'encre pour jet d'encre en maintenant un stock d'encres (1) pour chacune des encres pour jet d'encre fournies auxdits dispositifs d'impression à jet d'encre à un niveau prédéterminé, **caractérisé en ce que** les encres pour jet d'encre sont fournies dans des unités de transport d'encre (6) comprenant un code lisible par machine et que les unités de transport d'encre (6) sont choisies parmi le groupe composé de bouteilles, jerrycans, fûts et conteneurs IBC.
